(19) Europäisches Patentamt
European Patent Office
Office européen des brevets

(11) EP 1 495 861 A1

(12) **EUROPEAN PATENT APPLICATION**

(43) Date of publication:
**12.01.2005 Bulletin 2005/02**

(51) Int Cl.[7]: **B32B 27/32**, B65D 1/02

(21) Application number: **03102077.9**

(22) Date of filing: **10.07.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **TOTAL PETROCHEMICALS RESEARCH FELUY**
**7181 Seneffe (Feluy) (BE)**

(72) Inventors:
- **Smits, Valérie**
  **B-6540, Lobbes (BE)**
- **Maziers, Eric**
  **B-7180, Seneffe (BE)**

(74) Representative: **Leyder, Francis**
**Total Petrochemicals Research Feluy**
**Zone Industrielle C**
**7181 Seneffe (Feluy) (BE)**

(54) **High transparency, high impact resistance containers**

(57) This invention concerns multi-layer containers prepared by co-extruding polypropylene with one or more polyethylene(s), wherein the internal layer is prepared with polypropylene and the external layer is prepared with a metallocene-produced polyethylene, and wherein no tie layer is necessary between a polypropylene layer and a metallocene-prepared polyethylene layer. It also covers monolayer containers prepared from a blend of polypropylene and metallocene-prepared polyethylene.

EP 1 495 861 A1

## Description

The field of this invention is multilayer containers having an inside polypropylene layer and an outside metallocene-produced polyethylene layer or single layer containers prepared from a blend of polypropylene and metallocene-roduced polyethylene.

Milk bottles are generally produced using conventional blow moulding polyethylene grade such as for example Eltex® 4020 or Lacqtene® 2020. The use of polyethylene as raw material presents some drawbacks such as the low transparency, low chemical resistance, low thermal resistance and low compression resistance.

From the market point of view, low transparency associated with natural polyethylene resins limits the attractiveness of the product and it is responsible for unattractive containers such as for examples the polyethylene-prepared chocolate milk bottles.

The poor chemical, thermal and compression resistances lead to problem for silo storage and bottle filling step.

In an attempt to respond to the market demand for clear and transparent bottles, polyethylene terephthalate (PET) has been used to prepare transparent containers. The products prepared with PET also have major drawbacks.

- The conventional machines used for polyethylene resins are not adequate for this material and converters have to invest in new and costly injection stretch blow moulding machines.
- The raw material itself (PET) is less efficient than polyolefins.
- PET cannot be sterilised which is detrimental to applications such as milk bottles.
- The injection stretch blow moulding machines necessary to process PET are not presently able to produce containers having integrated handles.

As another alternative to polyethylene, polypropylene, especially random copolymers of propylene have been used as raw material in extrusion blow moulding for the production of transparent bottles. These bottles though suffer from a very poor impact resistance at temperatures inferior to 5 °C. This is a major penalty for example in the field of milk bottles.

A multi layer container comprising a layer of polyethylene and a layer of polypropylene have been considered, but it was known in the field that polyethylene does not adhere to polypropylene and an adhesion layer has thus been necessary.

For example, in an article published in Science, vol. 288, p. 2187, 2000, it is stated that polyethylene and polypropylene do not adhere to each other.

In an attempt to overcome this drawback, EP-A-1,302,310 discloses multi layer films or sheets prepared by coextruding or laminating polypropylene and metallocene-prepared polyethylene and wherein a good adhesion is observed in the absence of a tie layer.

At the $8^{th}$ annual European polymers, Films, Lamination and Extrusion Coating Conference, a presentation by Anna Perez Moreno discloses the adhesion of polyolefin plastomers (POP) on oriented polypropylene (OPP) films. It describes that the adhesion of POP on OPP depends upon the density of the POP, the lower density product having a better adhesion. It further describes that modification of the POP can improve its adhesion onto the OPP. It is silent about the adhesion of POP on polypropylene in co-extrusion or lamination.

There is a need for preparing containers that have the good impact resistance of the polyethylene and the good rigidity and transparency of the polypropylene. It is therefore desirable to coextrude polyethylene and polypropylene without tie layer or without modifying the polyethylene. A typical tie layer is costly and requires more complex extrusion machines.

It is an aim of the present invention to prepare containers by coextruding polyethylene and polypropylene without tie layer and without modifying the polyethylene.

It is another aim of the present invention to improve the adhesion between polyethylene and polypropylene.

It is yet another aim of the present invention to produce containers having simultaneously good optical properties and adequate rigidity.

It is a further aim of the present invention to produce containers having high impact resistance even at low temperature.

It is yet a further aim of the present invention to prepare coextruded blow moulded hollow packaging that can be easily removed from the mould.

it is another aim of the present invention to prepare containers that can undergo sterilisation and stacking in silos.

It is also an aim of the present invention to allow cold knife cutting of the paraison.

Accordingly, the present invention provides multi-layer containers prepared by coextruding polypropylene with one or more polyethylene(s) wherein the innermost layer is prepared with polypropylene and the outermost layer is prepared with metallocene-produced polyethylene, characterised in that no tie layer is necessary between a polypropylene layer and a metallocene-produced polyethylene layer.

Alternatively special optical effects can be obtained in multi-layer containers prepared by coextruding polypropylene with one or more polyethylene(s), wherein the outermost layer is prepared with polypropylene and the innermost layer is prepared with metallocene-produced polyethylene, characterised in that no tie layer is necessary between a polypropylene layer and a metallocene-produced polyethylene (mPE) layer.

In a preferred embodiment according to the present invention the container is a bi-layer bottle wherein the inside layer is prepared from polypropylene and represents from 1 to 99 % of the bottle's wall thickness and wherein the outside layer is prepared from a metallocene-produced polyethylene and represents from 99 to 1 % of the bottle's wall thickness. These bottles have simultaneously high rigidity, high transparency and high impact resistance.

Preferably the polyethylene external layer represents from 2 to 20 % and more preferably from 5 to 15 % of the bottle's wall thickness, the remainder being the polypropylene internal layer.

In another preferred embodiment according to the present invention, the container is a tri-layer milk bottle wherein the inside layer is prepared from polypropylene and represents from 1 to 80 % of the bottle's wall thickness, the middle layer is prepared from regrind and represents from 10 to 40 % of the bottle's wall thickness and the outside layer is prepared from a metallocene-produced polyethylene and represents from 20 to 1 % of the bottle's wall thickness.

Alternatively, the containers can be prepared from a blend of polyethylene and polypropylene, wherein the polyethylene is prepared with a metallocene catalyst in order to provide compatibility between the polypropylene and polyethylene. The blend comprises from 1 to 50 wt% of metallocene-prepared polyethylene based on the total weight of the blend and from 50 to 99 wt% of polypropylene. Preferably, the blend comprises from 1 to 20 wt% of mPE.

All the containers and bottles produced according to the present invention have excellent optical properties, both in transparency and in gloss as a result of the improved interface between polyethylene and polypropylene and as a result of the excellent intrinsic optical properties of polypropylene and of metallocene-produced polyethylene. In addition, they have very high impact resistance at low temperature because of the polyethylene and excellent rigidity because of the polypropylene.

The mPE and the polypropylene are coextruded and blow moulded to produce hollow packaging and bottles. The blow moulding techniques include injection moulding, injection blow moulding and injection stretch moulding. The mPE external layer facilitates the unmoulding operation and thereby reduces the cycle time. The mPE also allows cold knife cutting of the paraison.

The polypropylene used in the present can be any polypropylene suitable for extrusion blow moulding. It can be a homopolymer or copolymer or terpolymer of propylene prepared with a Ziegler-Natta catalyst or a physical or chemical blend thereof. Alternatively a polypropylene produced by a metallocene catalyst can be a homopolymer, a copolymer, being either a random or block copolymer, or terpolymer of isotactic or of syndiotactic polypropylene such as disclosed for example in EP-A-881,236, EP-A-965,603, EP-A-1,010,709 or WO-00/49209.

The metallocene-produced polyethylene resin used in the present invention can be prepared with any metallocene catalyst system known in the art but it is preferably prepared with a catalyst system based on a tetrahydroindenyl component given by the general formula:

$$\text{I.} \qquad R''(Ind)_2\ MQ_q$$

wherein Ind is an indenyl or a tetrahydro indenyl, substituted or unsubstituted, R" is a structural bridge imparting rigidity between the two indenyls, M is a group 4b, 5b or 6b transition metal, Q is a hydrocarbyl radical such as aryl, alkyl, alkenyl, alkylaryl, or aryl alkyl radical having from 1-20 carbon atoms, hydrocarboxy radical having 1-20 carbon atoms or halogen and can be the same or different from each other and p is the valence of M minus 2.

R" can be a $C_1$-$C_4$ alkylene radical, a dialkyl germanium or silicon or siloxane, or a alkyl phosphine or amine radical. Preferably, the bridge is $Me_2C$, ethylene, $Ph_2C$ or $Me_2Si$

Preferably, the indenyls, if substituted are symmetrically substituted in positions 2 and/or 4 and more preferably they are unsubstituted.

These metallocene components are disclosed in WO 96/35729. The most preferred metallocene catalyst is ethylene bis (4,5,6,7-tetrahydro-1-indenyl) zirconium dichloride.

Bis (n-butyl-cyclopentadienyl) compounds may also be used.

The metallocene may be supported according to any method known in the art. In the event it is supported, the support used in the present invention can be any organic or inorganic solids, particularly porous supports such as talc, inorganic oxides, and resinous support material such as polyolefin. Preferably, the support material is an inorganic oxide in its finely divided form.

The addition of a cocatalyst having an ionising action creates an active site.

Preferably, alumoxane is used as cocatalyst during the polymerization procedure, and any alumoxane known in the art is suitable.

The preferred alumoxanes comprise oligomeric linear and/or cyclic alkyl alumoxanes represented by the formula :

$$\text{(IV)}\ R-(\underset{\underset{R}{|}}{Al}-O)_n-AlR_2$$

for oligomeric, linear alumoxanes
and

$$\text{(V)}\ (-\underset{\underset{R}{|}}{Al}-O-)_m$$

for oligomeric, cyclic alumoxanes, wherein n is 1-40, preferably 10-20, m is 3-40, preferably 3-20 and R is a $C_1$-$C_8$ alkyl group and preferably methyl.
Methylalumoxane is preferably used.

When alumoxane is not used as a cocatalyst, one or more aluminiumalkyl represented by the formula $AlR_3$ are used wherein each R is the same or different and is selected from halides or from alkoxy or alkyl groups having from 1 to 12 carbon atoms. Especially suitable aluminiumalkyl are trialkylaluminium, the most preferred being triisobutylaluminium (TIBAL).

The polymerisation of the metallocene-produced polyethylene can be carried out in gas, solution or slurry phase. Slurry polymerisation is used to prepare the medium and high density polyetyhlene. Gas phase polymerisation is preferred to prepare low density polyethylene. Solution polymerisation is preferred for the production of very low density polyethylene. The polymerisation temperature ranges from 20 to 125°C, preferably from 60 to 95°C and the pressure ranges from 0.1 to 5.6 Mpa, preferably from 2 to 4 Mpa, for a time ranging from 10 minutes to 4 hours, preferably from 1 and 2.5 hours.

A continuous single loop reactor is preferably used for conducting the polymerisation under quasi steady state conditions. A double loop reactor may also be used when a bi-modal resin is desired.

The average molecular weight is controlled by adding hydrogen during polymerisation. The relative amounts of hydrogen and olefin introduced into the polymerisation reactor are from 0.001 to 15 mole percent hydrogen and from 99.999 to 85 mole percent olefin based on total hydrogen and olefin present, preferably from 0.2 to 3 mole percent hydrogen and from 99.8 to 97 mole percent olefin.

The density of the polyethylene is regulated by the amount of comonomer injected into the reactor; examples of comonomer which can be used include 1-olefins, typically C3 to C20 olefins among which propylene, butene, hexene, octene, 4-methyl-pentene are preferred, the most preferred being hexene.

The densities of the polyethylenes required for preparing the polyethylene tie layer of the present invention range from 0.920 g/$cm^3$ to 0.965 g/$cm^3$, preferably from 0.917 to 0.960 g/$cm^3$ and most preferably from 0.925 to 0.950 g/$cm^3$, preferably from 0.925 to 0.940 g/$cm^3$. The density is measured at 23 °C following the method of standard test ASTM D 1505.

The melt index of polyethylene is regulated by the amount of hydrogen injected into the reactor. The melt indices useful in the present invention range from 0.1 g/10 min to 4 g/10 min, preferably from 0.5 to 1.5 g/10 min. The melt index is measured using the procedures of standard test ASTM D 1238 at 190 °C using a load of 2.16 kg.

The polyethylene resin used in the present invention can be prepared with either a single site metallocene catalyst, in a one- or two-loop reactor or with a multiple site metallocene catalyst and it has therefore either a monomodal or a bimodal molecular weight distribution (MWD). A narrow molecular weight distribution is preferred. The molecular weight distribution can be completely defined by means of a curve obtained by gel permeation chromatography. Generally the molecular weight distribution is more simply defined by a parameter known as the dispersion index D, which is the ratio between the average molecular weight by weight (Mw) and the average molecular weight by number (Mn). The dispersion index constitutes a measure of the width of the molecular weight distribution. It is of from 2 to 7, preferably of from 2 to 5.

It has also been observed that the amount of crystallisation plays a role in the adhesion of metallocene-produced polyethylene to polypropylene, when measured at high temperature or at low equivalent Short Chain Branches (SCB) content. The amount of crystallisation as a function of short chain branches is studied by the Stepwise Isothermal Segregation Technique (SIST). In this technique, the sample is heated from room temperature (25 °C) to 220 °C at a rate of 200 °C/min. It is kept at 220 °C for 5 minutes. It is then dropped to the temperature of 140 °C at a rate of 20 °C/min and kept at that temperature for 40 minutes. The temperature is then dropped by steps of 5 °C at a rate of 20 °C/min and kept at each step for 40 minutes until the temperature of 90 °C is reached. It is then allowed to cool down to 25 °C at the fastest cooling rate and maintained at 25 °C for 3 minutes. It is next reheated from 25 °C to 180 °C at a rate of 5 °C/min. The percentage of crystallisation is deduced from the curve representing the SCB as a function of melting temperature following the method described by Satoru Hosada in Polymer Journal, vol. 20, p. 383, 1988. In the metallocene-produced polyethylene used in the present invention, the percentage of crystallisation corresponding to chains having less than 10 SCB for 1000 carbon atoms is at least 4 %, preferably it is at least 7 %.

Typically the internal polypropylene layer represents from 1 to 99 % of the total wall thickness of the bottles, the remaining percentage being prepared from one or more layers of polyethylene, preferably from one layer of metallocene-produced polyethylene. Preferably, the internal polypropylene layer represents from 80 to 98 % of the total wall thickness and more preferably from 85 to 95 %. It must be noted that the metallocene-prepared polyethylene can be used as tie layer between polypropylene and conventional polyethylene.

The polypropylene and polyethylene are coextruded and then blow moulded to produce the bottles according to the present invention. Preferably, the extrusion temperature of the polyethylene is increased to improve the adhesion between the polyethylene and polypropylene.

The invention is preferably used to prepare milk bottles. The milk bottles prepared according to the present invention are characterised by a high processability, a very high impact resistance, even at low temperature, a good compression resistance interesting for silo storage, an excellent thermal resistance necessary for silo storage and high temperature sterilisation, a very good transparency for attractive packaging, an improved environmental stress crack resistance (ESCR) important on the filling line, an attractive balance between cost and performance, a good recyclability and additionally, they offer the possibility of having an integrated handle.

The present invention also provides mono-layer containers or bottles prepared from a blend of polypropylene and metallocene-prepared polyethylene, wherein the metallocene-prepared polyethylene represents from 1 to 50 wt% of the blend based on the total weight of the blend, preferably from 1 to 20 wt%.

The co-extruded bottles according to the present invention can be used in other applications such as for example personal and healthcare, household, industrial and chemical packaging as well as medical packaging requiring sterilisation capabilities and impact strength.

The present invention can also be used in the preparation of multi-layer thermoformed containers for food packaging as well as for cosmetic or for detergent packaging.

**Examples.**

Several polyethylene resins have been tested in co-extrusion with the polypropylene to prepare two-layer bottles.

Metallocene-produced polyethylene resins.

Resin R1 is a medium density polyethylene prepared with ethylene bis (4,5,6,7-tetrahydro-1-indenyl) zirconium dichloride as follows. The polyethylene resin was obtained by continuous polymerisation in a loop slurry reactor with a supported and ionised metallocene catalyst prepared in two steps by first reacting $SiO_2$ with MAO to produce $SiO_2$.MAO and then reacting 94 wt% of the $SiO_2$.MAO produced in the first step with 6 wt% of ethylene bis-(tetrahydroindenyl) zirconium dichloride. The dry catalyst was slurried in isobutane and pre-contacted with triisobutylaluminium (TiBAl, 10 wt% in hexane) before injection in the reactor. The reaction was conducted in a 70 l capacity loop reactor with the polymerisation temperature being maintained at 85 °C,. The operating conditions are as follows:

TIBAl: 120 $cm^3$/h
IC4: 26 kg/h
C2: 9 kg/h
C6: 50 $cm^3$/h
H2: 1.2 Nl/h.

Resin R2 is a high density polyethylene resin sold by ATOFINA under the name Lacqtene® 2020.

Resin R3 is a linear low density polyethylene prepared with a Ziegler-Natta catalyst system and sold by ATOFINA under the name Lacqtene® FE8000.

Resin R4 is a classical random copolymer of propylene prepared with a Ziegler-Natta catalyst system and sold by ATOFINA under the name ATOFINA PPM R021®.

Resins R5 and R6 are two clarified random copolymer of propylene prepared with a Ziegler-Natta catalyst system and sold by ATOFINA respectively under the names PPR 3220® and PPR 3220 501®.

The properties of these resins are summarised in Table I.

TABLE I.

| Resin | Density g/cm$^3$ | MI2 g/10 min 190°C | MFI g/10min 230 °C | Mn kDa | Mw kDa | Mz kDa | MWD | D' |
|---|---|---|---|---|---|---|---|---|
| R1 | 0.934 | 0.9 | | 32 | 85 | 167 | 2.6 | 2 |
| R2 | 0.953 | 1.5 | | 15 | 126 | 874 | 8.2 | 6.9 |
| R3 | 0.924 | 0.8 | | | | | | |
| R4 | 0.905 | | 1.8 | 49 | 427 | 1962 | 8.7 | 4.6 |
| R5 | 0.905 | | 1.7 | 51 | 429 | 1826 | 8.4 | 4.3 |
| R6 | 0.905 | | 1.7 | 55 | 432 | 1724 | 7.9 | 4 |

MI2 has been measured following the method of standard test ASTM D 1238, under a load of 2.16 kg and at a temperature of 190 °C. MFI has been measured following the method of standard test ASTM D 1238, under a load of 2.16 kg and at a temperature of 230 °C.

Nine bottles have been prepared from the six resins either alone or as bi-layer containers. They are described in Table II.

TABLE II.

| Bottle | Composition |
|---|---|
| B1 | R2 |
| B2 | R4 |
| B3 | 90 % R4 inside + 10 % R1 outside |
| B4 | R5 |
| B5 | 90 % R5 inside + 10 % R1 outside |
| B6 | R6 |
| B7 | 90 % R6 inside + 10 % R1 outside |
| B8 | 90 % R6 inside + 10 % R3 outside |
| B9 | 60 % R6 inside + 30 % regrind + 10 % R1 outside |

The bottles were produced on a KEB 5/430 extrusion blow moulding machine with a converting tool having a mean diameter of 12.5 mm. The mould was a sand blasted 1 litre mould for milk bottles. The target wall thickness was of 500 microns and the target bottle weight was of 34 g. The polyethylene, when used alone, was processed at a temperature of 170 °C and the polypropylene or the co-extruded polypropylene/polyethylene composition were processed at a temperature of 190 °C. The processing conditions are summarised in Table III.

TABLE III.

| Bottle | T (°C) | Weight (g) | Thickness (mm) | Gap (mm) |
|---|---|---|---|---|
| B1 | 169 | 34.1 | 0.5 | 1.58 |
| B2 | 187 | 33.2 | 0.55 | 1.49 |
| B3 | 188 | 33.1 | 0.5 | 1.94 |
| B4 | 188 | 34.2 | 0.6 | 1.67 |
| B5 | 188 | 33.5 | 0.47 | 1.49 |
| B6 | 187 | 33.8 | 0.54 | 1.67 |

TABLE III. (continued)

| Bottle | T (°C) | Weight (g) | Thickness (mm) | Gap (mm) |
|---|---|---|---|---|
| B7 | 190 | 34.8 | 0.6 | 2.01 |
| B8 | 189 | 33.9 | 0.52 | 1.58 |
| B9 | 193 | 33.2 | 0.53 | 2.56 |

It was observed that the co-extrusion configuration does not affect the processibility. Very high processibility as well as improved melt strength and improved melt fracture have also been observed. In addition, cold cutting is possible because of the polyethylene external layer, in contrast with the heated knife typically requested for cutting polypropylene.

The haze of the bottles has been measured following the method of standard test ISO 14782. The haze values for the 9 bottles is displayed in Table IV.

TABLE IV.

| Bottle | Haze (%) |
|---|---|
| B1 | 65 |
| B2 | 47 |
| B3 | 42 |
| B4 | 17 |
| B5 | 19 |
| B6 | 17 |
| B7 | 21 |
| B8 | 18 |
| B9 | 27 |

It was observed that the addition of a 10 % external layer of polyethylene did not significantly modify the optical properties of random copolymers of propylene. This can be seen by comparing the haze value of bottle B3 with that of bottle B2, or bottle B5 with bottle B4, or bottles B7 and B8 with bottle B6. This is to be compared with the haze values of bottle B1 prepared from pure polyethylene. Bottle B9 prepared with a 30 % middle layer of regrind had very acceptable haze values. Bottle B8 prepared with a 10 % external layer of conventional polyethylene also had very good optical properties but delamination has been observed.

Additionally, the metallocene-prepared polyethylene of the external layer has an excellent gloss in addition to good transparency. Surface effects can thus be obtained as for example by using pigments in the internal layer alone.

The compression strength has been tested following the method of standard test ASTM 2659-95 on a Zwich tensile machine operated at a velocity of 10 mm/min. The results are summarised in Table V.

TABLE V.

| Bottle | Yield strength (N) |
|---|---|
| B1 | 220 |
| B2 | 282 |
| B3 | 236 |
| B4 | 296 |
| B5 | 252 |

Bottles prepared with polypropylene alone (B2 and B4) have the highest compression strength, but the addition of a polyethylene external layer (B3 and B5) gives bottles with a much higher compression strength than that of bottles prepared with polyethylene alone (B1). The thermal resistance of co-extruded bottles is also much higher than that of bottles prepared with polyethylene alone. These two properties bring a significant advantage in silo storage

requiring good resistance to temperature and to load.

The impact strength was measured by a drop test developed in house and based upon a UN norm and standard test ASTM 2463-95 as follows. Bottles filled with 95% water and conditioned at room temperature (25 °C) or at 3 °C during 48 hours were dropped from a certain height H on the bottom. The staircase method was used: a set of test specimens were dropped from various heights, the drop height being raised or lowered according to the results obtained with the last specimen. The drop height was lowered if the last specimen failed and vice-versa. The height increment was set at 300 mm and the starting height was defined by preliminary testing. The mean failure height $H_{50}$ was calculated according to the formula:

$$H_{50} = H_0 + d. (A/N +/- 0.5)$$

Wherein d is the increment in height drop, N is the number of failures or non-failures, whichever is less, $H_0$ is the lowest height at which any one of N occurs and A is defined as

$$A = \sum_{i=0}^{k} i.\ n_i$$

wherein i is the running index indicating the tested heights $h_i$ in progressive order of magnitude and $n_i$ is the number of failure or non-failure, whichever is pertinent, at level i. The sign + is associated with non-failure and the sign - is associated with failure. The results are summarised in Table VI.

TABLE VI.

| Bottle | Impact strength at 25 °C $H_{50}$ (m) | Impact strength at 3 °C $H_{50}$ (m) |
|---|---|---|
| B1 | 5.6 | 4.4 |
| B2 | 1.9 | 0.2 |
| B3 | 2.9 | - |
| B4 | 2.5 | 0.3 |
| B5 | 3.3 | 1.7 |
| B6 | 2.2 | 0.6 |
| B7 | 3.4 | 2.4 |
| B8 | 3.6 | 1.6 |
| B9 | 2.7 | 2.1 |

Co-extruded bottles show a significant improvement in impact strength both at room temperature and at low temperature when compared with the bottles prepared with polypropylene alone.

The chemical resistance of the bottles has been measured using an internal method as follows. Bottles were filled at 95 % with Huperol 5% as tensio-active solution and they were conditioned at 40 °C for 48 hours. A guided load of 10 kg was then applied and the time elapsed until the occurrence of fissures or leakage was recorded. The results are displayed in Table VII.

TABLE VII.

| Bottle | Time for leakage (days) |
|---|---|
| B1 | 8 |
| B2 | >42 |
| B3 | >42 |
| B4 | >42 |

TABLE VII. (continued)

| Bottle | Time for leakage (days) |
|---|---|
| B5 | >42 |

The milk bottles prepared according to the present invention thus have an excellent balance of mechanical and optical properties as well as a good cost performance.

## Claims

1. A multi-layer container prepared by co-extruding polypropylene with one or more polyethylene(s), wherein the innermost layer is prepared with polypropylene and the outermost layer is prepared with a metallocene-produced polyethylene, **characterised in that** no tie layer is necessary between a polypropylene layer and a metallocene-prepared polyethylene layer.

2. The multi-layer container according to claim 1 consisting of one internal polypropylene layer and one external metallocene-produced polyethylene layer.

3. The multi-layer container of claim 1 or claim 2 wherein the polypropylene internal layer represents from 1 to 99 % of the total wall thickness of the container and the external metallocene-produced polyethylene layer represents from 99 to 1 % of the total wall thickness of the container.

4. The multi-layer container of claim 3 wherein the polypropylene internal layer represents from 85 to 95 % of the total wall thickness of the container.

5. The multi-layer container according to claim 1 consisting of one internal polypropylene layer, one middle layer prepared from regrind and one external metallocene-produced polyethylene layer.

6. The multi-layer container of claim 5 wherein the polypropylene internal layer represents from 1 to 80 % of the total wall thickness of the container, the regrind middle layer represents from 10 to 40 % of the total wall thickness of the container and the external metallocene-produced polyethylene represents from 1 to 20 % of the total wall thickness of the container.

7. The multi-layer container according to any one of the preceding claims wherein the metallocene-produced polyethylene has a density of from 0.920 to 0.940 g/cm$^3$ and a melt flow index MI2 of from 0.1 to 4 g/10 m.

8. Use of the multi-layer container according to any one of claims 1 to 7 for preparing milk bottle having good optical properties and good impact strength at room temperature and at low temperature.

9. Use according to claim 8 wherein the milk bottles have improved chemical and thermal resistance and improved silo storage.

10. Use of the multi-layer container according to any one of claims 1 to 7 for preparing medical containers having improved thermal resistance for sterilisation and improved impact strength.

11. Use of the multi-layer container according to any one of claims 1 to 7 for preparing thermoformed containers for food, cosmetic and detergent packaging.

European Patent Office

# EUROPEAN SEARCH REPORT

Application Number
EP 03 10 2077

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/039630 A1 (ROUSSELET GUILHEM ET AL) 4 April 2002 (2002-04-04) * paragraphs [0068],[0078]-[0082],[0085],[0086]; claim 40 * | 1-10 | B32B27/32 B65D1/02 |
| X | US 5 491 019 A (KUO BETSY P) 13 February 1996 (1996-02-13) * column 2, line 39 - line 49 * * column 9, line 46 - line 48 * * column 9, line 65 - column 10, line 3 * * column 11, line 9 - line 14; examples 1-3; table 1 * | 1-7 | |
| X | WO 97 44178 A (UNION CAMP CORP) 27 November 1997 (1997-11-27) * page 8, line 8 - line 10; examples 1,2 * | 1-7 | |
| D,X | EP 1 302 310 A (ATOFINA RES S A) 16 April 2003 (2003-04-16) * paragraphs [0015],[0017],[0041] * | 1-7,11 | |
| | | | TECHNICAL FIELDS SEARCHED (Int.Cl.7) |
| A | EP 0 850 756 A (JAPAN POLYCHEM CORP) 1 July 1998 (1998-07-01) * abstract * | 1 | B32B B65D |

The present search report has been drawn up for all claims

| Place of search | Date of completion of the search | Examiner |
|---|---|---|
| MUNICH | 3 December 2003 | Attalla, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 03 10 2077

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2003

| Patent document cited in search report | Publication date | Patent family member(s) | Publication date |
|---|---|---|---|
| US 2002039630 A1 | 04-04-2002 | FR 2814435 A1 | 29-03-2002 |
| | | FR 2814436 A1 | 29-03-2002 |
| | | BR 0105296 A | 21-05-2002 |
| | | CA 2357859 A1 | 25-03-2002 |
| | | CN 1346777 A | 01-05-2002 |
| | | EP 1190950 A1 | 27-03-2002 |
| | | JP 2002205723 A | 23-07-2002 |
| US 5491019 A | 13-02-1996 | AU 690671 B2 | 30-04-1998 |
| | | AU 2231295 A | 17-10-1995 |
| | | BR 9507252 A | 02-09-1997 |
| | | CA 2127409 A1 | 29-09-1995 |
| | | EP 0752930 A1 | 15-01-1997 |
| | | NZ 283867 A | 26-02-1998 |
| | | WO 9526269 A1 | 05-10-1995 |
| | | US 6517950 B1 | 11-02-2003 |
| | | US 5638660 A | 17-06-1997 |
| | | US 5849127 A | 15-12-1998 |
| | | US 5962092 A | 05-10-1999 |
| | | US 6294210 B1 | 25-09-2001 |
| WO 9744178 A | 27-11-1997 | CA 2253218 A1 | 27-11-1997 |
| | | EP 0906181 A1 | 07-04-1999 |
| | | WO 9744178 A1 | 27-11-1997 |
| EP 1302310 A | 16-04-2003 | EP 1302310 A1 | 16-04-2003 |
| | | WO 03031509 A2 | 17-04-2003 |
| EP 0850756 A | 01-07-1998 | JP 3416433 B2 | 16-06-2003 |
| | | JP 10180962 A | 07-07-1998 |
| | | JP 10180909 A | 07-07-1998 |
| | | CN 1189410 A ,B | 05-08-1998 |
| | | EP 0850756 A2 | 01-07-1998 |

EPO FORM P0459

For more details about this annex : see Official Journal of the European Patent Office, No. 12/82